# EUROPÄISCHE PATENTSCHRIFT

(11) **EP 1 859 517 B1**
(45) Veröffentlichungstag und Bekanntmachung des Hinweises auf die Patenterteilung: **10.04.2019**
(21) Anmeldenummer: 06706873.4
(22) Anmeldetag: 10.02.2006
(51) Int. Cl.: H02B 1/052, H02B 1/21

(54) **ANSCHLUSS- ODER GERÄTEADAPTER**
CONNECTION OR DEVICE ADAPTER
ADAPTATEUR DE CONNEXIONS OU D'APPAREILS

(30) Priorität: 04.03.2005 DE 102005009856
(43) Veröffentlichungstag der Anmeldung: 28.11.2007
(73) Patentinhaber: Rittal GmbH & Co. KG, 35745 Herborn (DE)
(72) Erfinder: WAGENER, Hans, 35716 Dietzhölztal (DE); HECKER, Dirk, 35756 Mittenaar (DE); HAUBACH, Ulrich, 35753 Greifenstein (DE)
(74) Vertreter: Angerhausen, Christoph
(86) Internationale Anmeldenummer: PCT/EP2006/001254
(87) Internationale Veröffentlichungsnummer: WO 2006/094598

(56) Entgegenhaltungen:
- DE-A1- 10 061 940
- DE-A1- 10 215 500
- DE-U1- 20 021 418

## Beschreibung

Die Erfindung betrifft einen Anschluss- oder Geräteadapter nach dem Oberbegriff des Anspruchs 1. Ein derartiger Anschluss- oder Geräteadapter ist aus dem Dokument DE-A-100 61 940 bekannt, der senkrecht zur Längsrichtung von Stromsammelschienen auf einer Montageeinheit aufsetzbar und mechanisch verbindbar ist, wobei im Anschluss- oder Geräteadapter pro Stromsammelschiene ein Kontaktelement mit der zugekehrten Stromsammelschiene elektrisch leitend in Verbindung steht und wobei die Kontaktelemente im Anschluss- oder Geräteadapter zu Anschlussaufnahmen im Bereich einer Schmalseite des Anschluss- oder Geräteadapters geführt sind.

Ein Geräte- oder Anschlussadapter in Verbindung mit einem Sammelschienensystem ist aus der DE 103 00 723 A1 bekannt. Dabei ist das Sammelschienensystem mit der Montageeinheit und dem Anschluss- oder Geräteadapter als Dreiphasen-System ausgebildet. Der Einbau der Kontaktelemente im Anschluss- oder Geräteadapter und ihre Verbindung mit den Anschlussaufnahmen im Bereich der Schmalseiten erfordern einen erheblichen Montage- und Teileaufwand. Weitere Vorrichtungen sind auch aus der DE-U-200 21 418 oder DE-A-102 15 500 bekannt.

Es ist Aufgabe der Erfindung, einen Geräte- oder Anschlussadapter der eingangs erwähnten Art zu schaffen, bei dem für den Anschluss- oder Geräteadapter der Montage- und Teileaufwand wesentlich reduziert ist und für dessen Auslegung neue Variationsmöglichkeiten gegeben sind.

Diese Aufgabe wird nach der Erfindung durch die Merkmale des kennzeichnenden Teils von Anspruch 1 gelöst.

Die aus Kontaktschiene und Anschlussaufnahme bestehenden Anschlusseinheiten können ohne großen Teile- und Montageaufwand vorgefertigt und einfach mit dem Anschluss- oder Geräteadapter verbunden werden. Die Anschlussaufnahmen enthalten alle elektrischen Teile, die die Verbindung zur Kontaktschiene herstellen und die Anschlussmöglichkeit für Leitungen, Stecker oder dgl. bringen.

Dabei sind die Kontaktschienen mit den zugeordneten Anschlussaufnahmen in isolierenden Anschlussblöcken festgelegt sind und die Anschlusseinheiten in den als Verbindungsaufnahmen ausgebildeten Aufnahmen fixiert sind.

Bei dem Dreiphasen-Anschluss- oder Geräteadapter sind drei Anschlusseinheiten mit unterschiedlich langen, auf die beabstandeten Stromsammelschienen abgestimmten Kontaktelementen vorgesehen, wobei sich an den drei benötigten Anschlusseinheiten nur die Länge der Anschlusskontakte ändert. Der übrige Aufbau und die Verbindung der Teile zu den Anschlusseinheiten verbleibt jedoch gleich. Dabei ist der Zusammenbau einfach dadurch zu erzielen, dass bei der Herstellung der Anschlussblöcke im Kunststoff-Spritzgießverfahren die elektrischen Bauteile festgelegt und miteinander in elektrische Verbindung gebracht werden.

Die Verbindungsaufnahmen sind an einer Schmalseite des Anschluss- oder Geräteadapters angeordnet und als Einzelaufnahmen für die Anschlussblöcke ausgebildet. Dabei ist die Verbindung der Anschlusseinheiten mit dem Anschluss- oder Geräteadapter dergestalt, dass die Einzelaufnahmen als Rastaufnahmen für die Anschlussblöcke ausgebildet sind.

Nach einer vorteilhaften Weiterbildung ist vorgesehen, dass die Rastaufnahmen unterschiedlich breite Anschlussblöcke mit unterschiedlich breiten Kontaktelementen aufnehmen, wobei die Breite parallel zur Längsrichtung der Stromsammelschienen ausgerichtet ist. Auf diese Weise kann das isolierende Gehäuse des Anschluss- oder Geräteadapters auf unterschiedliche Stromstärken ausgelegt werden, wenn Anschlusseinheiten mit unterschiedlich breiten Kontaktelementen eingesetzt werden. Die Aufnahme der Kontaktelemente im Anschluss- oder Geräteadapter und die Kontaktierung mit den Stromsammelschienen wird nach einer Ausgestaltung dadurch gelöst, dass der Anschluss- oder Geräteadapter auf der der Montageeinheit zuzukehrenden Unterseite mittels Trennwände in Sammelschienenaufnahmen unterteilt ist, dass die Kontaktelemente auf der Oberseite oder einer Zwischenwand des Anschluss- oder Geräteadapters von Längsnuten aufgenommen und mit den an deren Enden ausgeformten, bügelartigen Kontaktstellen durch Aussparungen in die Sammelschienenaufnahmen ragen und dass die Kontaktelemente auf der Oberseite mittels einer Abdeckplatte abgedeckt sind. Die Oberseite des Anschluss- oder Geräteadapters kann dann vollständig für den weiteren Aufbau von Geräten und dgl. ausgenützt werden. Zudem besteht nur für die Kontaktstellen der Kontaktelemente die Verbindung zu den Sammelschienenaufnahmen der Unterseite des Anschluss- und Geräteadapters und damit zu den Stromsammelschienen der Montageeinheit.

Die Abdeckung der Kontaktelemente ist nach einer Ausgestaltung so ausgeführt, dass der Anschluss- oder Geräteadapter auf seiner Oberseite überstehende Längsrandteile aufweist, die eine Aufnahmewanne für die Kontaktelemente bilden und dass die Abdeckplatte in diese Aufnahmewanne eingerastet ist. Diese Längsrandteile können mit Befestigungsaufnahmen für den Aufbau von Geräten versehen sein, da sie die erforderliche Stabilität am Anschluss- oder Geräteadapter haben.

Damit die Kontaktstellen der Kontaktelemente im Anschluss- oder Geräteadapter definierte Stellungen einnehmen, sieht eine Weiterbildung vor, dass die Kontaktelemente im Anschluss an die Kontaktstellen mit einem Endteil die Aussparungen überbrücken und auf der Oberseite oder der Zwischenwand des Anschluss- oder Geräteadapters aufliegen.

Ist die Ausgestaltung so, dass der Anschluss- oder Geräteadapter an der Schmalseite nur eine Verbindungsaufnahme für eine Anschlusseinheit mit einem Anschlussblock und einem Kontaktelement aufweist, dann ist das Sammelschienensystem nur mit einer Phase ausnützbar und der Anschluss- und Geräteadapter auf die dafür erforderlichen Mittel beschränkt.

Die Ausgestaltung kann jedoch auch so erfolgen, dass der Anschluss- oder Geräteadapter an der Schmalseite eine Verbindungsaufnahme für einen Anschlussblock mit z.B. zwei oder drei Kontaktelementen aufweist. Anstelle von drei Anschlusseinheiten tritt die so gebildete Mehrfachanschlusseinheit, in der alle drei Kontaktelemente festgelegt und elektrisch mit den zugeordneten Anschlussaufnahmen verbunden sind.

Die Anschlussaufnahmen der Anschlusseinheiten können verschieden ausgestaltet sein. So kann eine montagefreundliche Ausgestaltung derart ausgebildet sein, dass die Anschlussaufnahmen der Anschlusseinheiten als schraubenlose Klemmanschlüsse für Einzelleiter ausgebildet sind.

Auf eine weitere Anschlussmontage kann auch dadurch verzichtet werden, dass die Anschlussaufnahmen als elektrische Steckaufnahmen für elektrische Stecker ausgebildet sind, die ihrerseits mit Leiteranschlüssen für anzuschließende Leiter versehen sind.

Eine weitere vorteilhafte Ausgestaltung, bei der kein Anschlussblock erforderlich ist, besteht darin, dass die Anschlussaufnahme an einem Anschlussstück ausgebildet ist, das mit seiner anderen Seite an der Kontaktschiene fest kontaktiert ist.

Die Erfindung wird anhand eines in den Zeichnungen dargestellten Ausführungsbeispiels näher erläutert. Es zeigen:
- Fig. 1: in perspektivischer Ansicht drei Anschlusseinheiten für einen Dreiphasen-Anschluss- oder Geräteadapter für hohe Stromstärke,
- Fig. 2: entsprechend drei Anschlusseinheiten mit Kontaktelementen für kleinere Stromstärke,
- Fig. 3A: eine abgewandelte Anschlusseinheit für einen Einphasen-Anschluss des Anschluss- und Geräteadapters und mit Stecker,
- Fig. 3B: einen an einer Montageeinheit angebrachten Geräteadapter mit einer Anschlusseinheit nach Fig. 3A mit entferntem Stecker,
- Fig. 3C: einen Schnitt durch einen Anschlussblock mit darin eingeformter Kontaktschiene,
- Fig. 4: die Ansicht auf die Oberseite eines Anschluss- oder Geräteadapters mit drei eingesetzten Anschlusseinheiten für ein Dreiphasen-System,
- Fig. 5: eine perspektivische Ansicht auf die abgedeckte Oberseite des mit Anschlusseinheiten bestückten Anschluss- oder Geräteadapters,
- Fig. 6: eine perspektivische Ansicht auf die Unterseite des Anschluss- oder Geräteadapters mit den Sammelschienenaufnahmen und den in diese ragenden Kontaktstellen der Kontaktelemente,
- Fig. 7: einen Geräteadapter mit einer Anschlusseinheit gemäß einem weiteren Ausführungsbeispiel und
- Fig. 8: den Geräteadapter nach Fig. 1 in auseinander gezogener Darstellung.

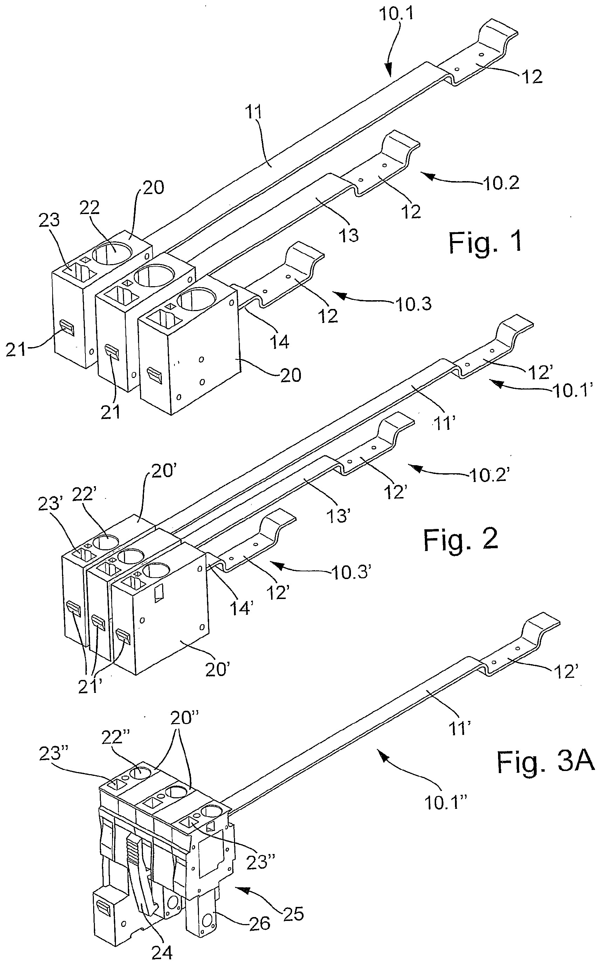

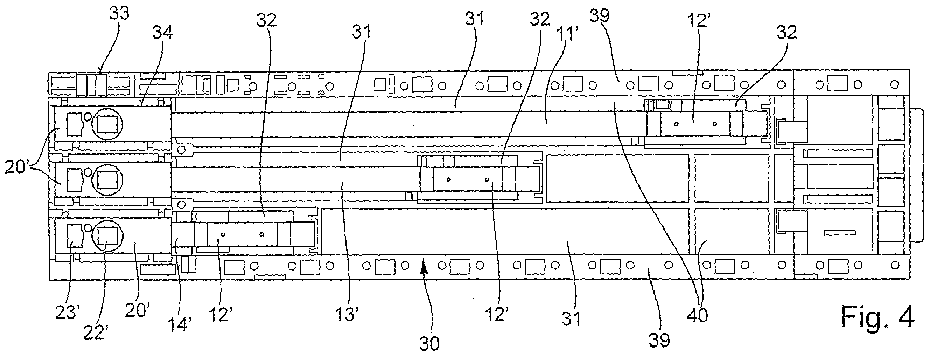

In Fig. 1 sind drei Anschlusseinheiten 10.1, 10.2 und 10.3 in perspektivischer Ansicht gezeigt, die für einen Anschluss- oder Geräteadapter 30 nach den Fig. 4 bis 6 verwendet werden, wenn dieser für alle drei Phasen des Sammelschienensystems mit einer Montageeinheit für drei beabstandete Stromsammelschienen kontaktiert wird.

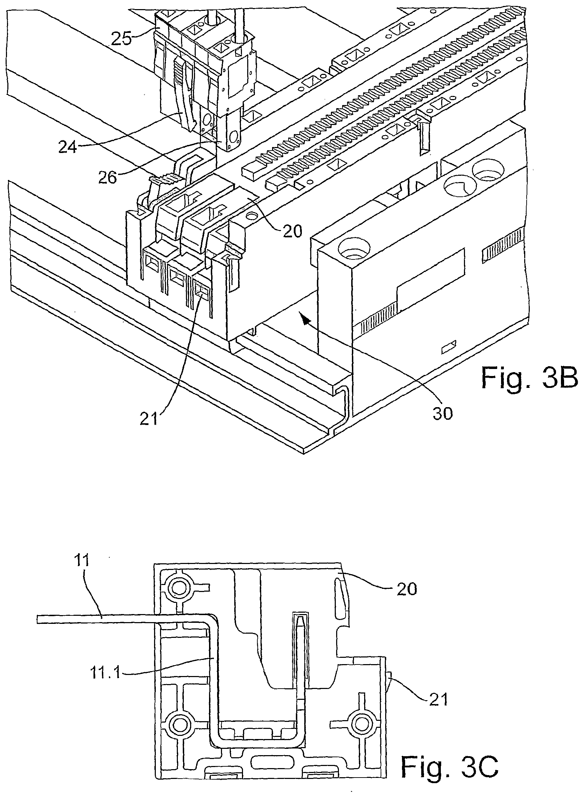

Diese Anschlusseinheiten 10.1, 10.2 und 10.3 können vorgefertigt werden und umfassen jeweils einen Anschlussblock 20 mit Anschlussaufnahmen 22 und 23, der im Kunststoff-Spritzgussverfahren hergestellt wird, wobei die als federelastische Kontaktschienen ausgebildeten Kontaktelemente 11, 13 und 14 sowie die kontaktierenden Elemente in den Anschlussaufnahmen 22 und 23 eingespritzt, gleichzeitig festgelegt und elektrisch miteinander verbunden werden. Fig. 3C zeigt die Festlegung einer Kontaktschiene 11 in dem zugehörigen Anschlussblock 20 mit einem U-förmigen Abschnitt 11.1. Anstelle jeweils einem Anschlussblock 20 eine Kontaktschiene 11, 13, 14 zuzuordnen, kann eine alternative Ausgestaltung auch in der Weise ausgeführt sein, dass die Kontaktschienen 11, 13, 14 in einem gemeinsamen zusammenhängenden Anschlussblock mit den Kontaktschienen zugeordneten Anschlussaufnahmen 22, 23 angebunden sind.

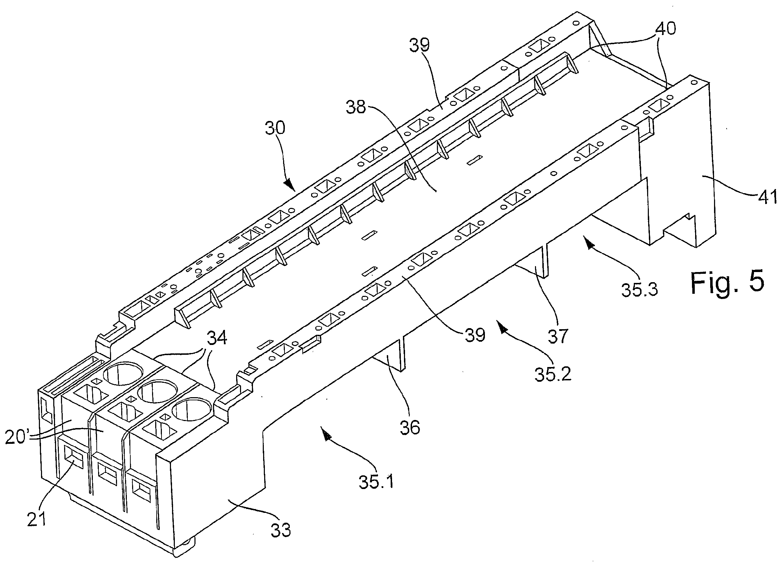

Wie die Fig. 4 bis 6 zeigen, weist der Anschluss- oder Geräteadapter 30 an einer Schmalseite des aus Isoliermaterial bestehenden Gehäuses einen Ansatz 33 auf, in den Verbindungsaufnahmen 34 eingebracht sind, die hier als Einzelaufnahmen ausgebildet sind. In diese Verbindungsaufnahmen 34 mit z.B. schachtförmiger Führung können von der Oberseite des Anschluss- oder Geräteadapters 30 die Anschlusseinheiten 10.1, 10.2 und 10.3 oder 10.1', 10.2' und 10.3' eingerastet werden. Dazu weisen die Anschlussblöcke 20 oder 20' an der Stirnseite angeformte Rastelemente 21 auf, die in Rastaufnahmen des Ansatzes 33 einrasten, wie der Fig. 5 entnommen werden kann. Die Verbindungsaufnahmen 34 können dabei eine Breite aufweisen und durch Zwischenwände so abgeteilt sein, dass die breitesten Anschlussblöcke 20 nach Fig. 1 Platz finden. In die Verbindungsaufnahmen 34 können jedoch auch schmälere Anschlussblöcke 20' nach Fig. 2 eingerastet werden, die auch schmälere als Kontaktschienen ausgebildete Kontaktelemente 11', 13' und 14' tragen. Die Länge der Kontaktelemente 11', 13' und 14' der Anschlusseinheiten 10.1', 10.2' und 10.3' nach Fig. 2 entspricht jedoch der Länge der Kontaktelemente 11, 13 und 14 der Anschlusseinheiten 10.1, 10.2 und 10.3 nach Fig. 1.

Aus der Fig. 4 ist zu ersehen, dass in die Oberseite des Anschluss- oder Geräteadapters 30 drei Längsnuten 31 beabstandet eingelassen sind, deren Breite an die größte Breite von Kontaktelementen 11, 13 und 14 angepasst ist und daher auch die schmäleren Kontaktelemente 11', 13' und 14' aufnehmen können. Die Oberseite des Anschluss- oder Geräteadapters ist durch erhöhte Längsrandteile 39 (Fig. 5) abgeschlossen, die eine Aufnahmewanne 40 begrenzen. Sind die Anschlusseinheiten 10.1 bis 10.3 oder 10.1' bis 10.3' in den Anschluss- oder Geräteadapter 30 eingerastet, dann können die Kontaktelemente 11, 13 und 14 oder 11', 13' und 14' mittels einer Abdeckplatte 38 zur Oberseite hin abgedeckt werden. Dabei lässt sich die Abdeckplatte 38 vorzugsweise in die Aufnahmewanne 40 einrasten. Die Längsrandteile 39 des Anschluss- oder Geräteadapters 30 sind mit Befestigungsaufnahmen versehen, damit auf der Oberseite des Anschluss- oder Geräteadapters 30 Befestigungshalter, Geräte und dgl. befestigt werden können.

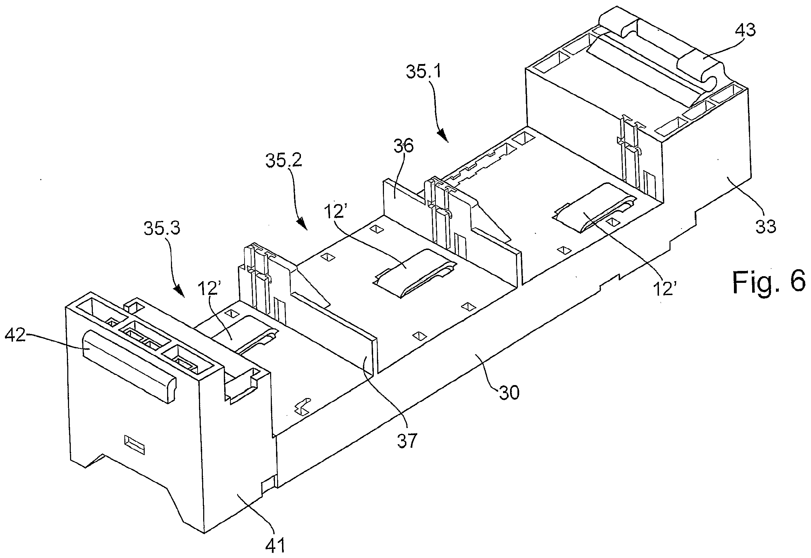

Die Kontaktelemente 11, 13 und 14 oder 11', 13' und 14' der Anschlusseinheiten 10.1, 10.2 und 10.3 oder 10.1', 10.2' und 10.3' sind unterschiedlich lang und laufen am freien Ende in Kontaktstellen 12 oder 12' aus. Diese Kontaktstellen 12 oder 12' sind bügelartig ausgebildet und ragen durch Aussparungen 32 des Anschluss- oder Geräteadapters 30 in Sammelschienenaufnahmen 35.1, 35.2 und 35.3 auf der Unterseite des Anschluss- oder Geräteadapters 30, die der Montageeinheit mit den Stromsammelschienen zugekehrt ist. Die Längen der Kontaktelemente 11, 13, 14 oder 11', 13', 14' und die Abstände der Aussparungen 35.1, 35.2, 35.3 im Anschluss- oder Geräteadapter 30 sind auf die Abstände der Stromsammelschienen in der Montageeinheit abgestimmt. Die Kontaktstellen 12 oder 12' ragen etwas in die Sammelschienenaufnahmen 35.1, 35.2 und 35.3, damit sie mit den Stromsammelschienen federnd in elektrischen Kontakt kommen können, sobald der Anschluss- oder Geräteadapter 30 mechanisch mit der Montageeinheit verbunden ist. Diese mechanische Verbindung kann mittels Rastelementen und/oder anderer Verbindungselemente erreicht werden, wie die Elemente 42 und 43 (Fig. 6) am Anschluss- oder Geräteadapter 30 erkennen lassen. Die entsprechenden Gegen-Verbindungs- und/oder - Rastelemente trägt die Montageeinheit.

Die als Kontaktschienen ausgebildeten Kontaktelemente 11, 13 und 14 oder 11', 13' und 14' laufen am freien Ende im Anschluss an die Kontaktstellen 12 oder 12' in Endteile aus, die sich nach den Aussparungen 32 auf der Oberseite der Aufnahmewanne 40 des Anschluss- oder Geräteadapters 30 abstützen, wie der Fig. 4 entnommen werden kann.

Es bleibt noch zu erwähnen, dass der Anschluss- oder Geräteadapter 40 auch für ein Einphasen-System verwendet werden kann. Im Ansatz 33 ist dann nur eine Verbindungsaufnahme 34 vorgesehen, in die eine Anschlusseinheit 10.1, 10.2, 10.3, 10.1', 10.2' oder 10.3' eingesetzt und eingerastet werden kann. Dabei kann durch die Auswahl der Anschlusseinheit bestimmt werden, mit welcher Stromsammelschiene der Montageeinheit der Anschluss- oder Geräteadapter im Einphasen-System verbunden und kontaktiert wird.

Wie die Fig. 3A erkennen lässt, kann die Anschlusseinheit als Einphasen-Anschlusseinheit nur ein Kontaktelement 11" oder als Mehrphasen-Anschlusseinheit die drei unterschiedlich langen Kontaktelemente tragen. Die Anschlussaufnahmen 22" und 23" sind entsprechend ein- oder dreimal vorgesehen und verteilt.

Weiterhin zeigt Fig. 3A einen Stecker 25, der mit Steckzapfen 26 in den Anschlussaufnahmen 23 oder 23' eingesteckt und darin kontaktiert ist und seinerseits Anschlussaufnahmen 22", 23" aufweist, in denen entweder Anschlussleiter von vornherein angeschlossen sein können oder in ähnlicher Weise wie in den Anschlussaufnahmen 22, 23 bzw. 22', 23' kontaktiert werden können. Mit dem Stecker 25 lassen sich die Anschlussleiter gemeinsam von den Anschlussblöcken 20, 20' und damit den Anschlusseinheiten leicht trennen. Zum Fixieren des Steckers 25 ist vorteilhaft ein Rasthebel 24 mit Rastnase vorgesehen, die mittels Federvorspannung in eine stirnseitige Vertiefung des Adaptergehäuses, beispielsweise eine Rastaufnahme 21 einschnappt. Fig. 3B zeigt in perspektivischer Darstellung einen auf einer Montageeinheit eines Sammelschienensystems angebrachten Geräteadapter 30 mit eingesetzten Anschlusseinheiten sowie einem abgenommenen Stecker 25, der in die betreffenden Anschlussaufnahmen 23 der Anschlussblöcke 20 einsteckbar und seinerseits mit Anschlusskabeln versehen ist.

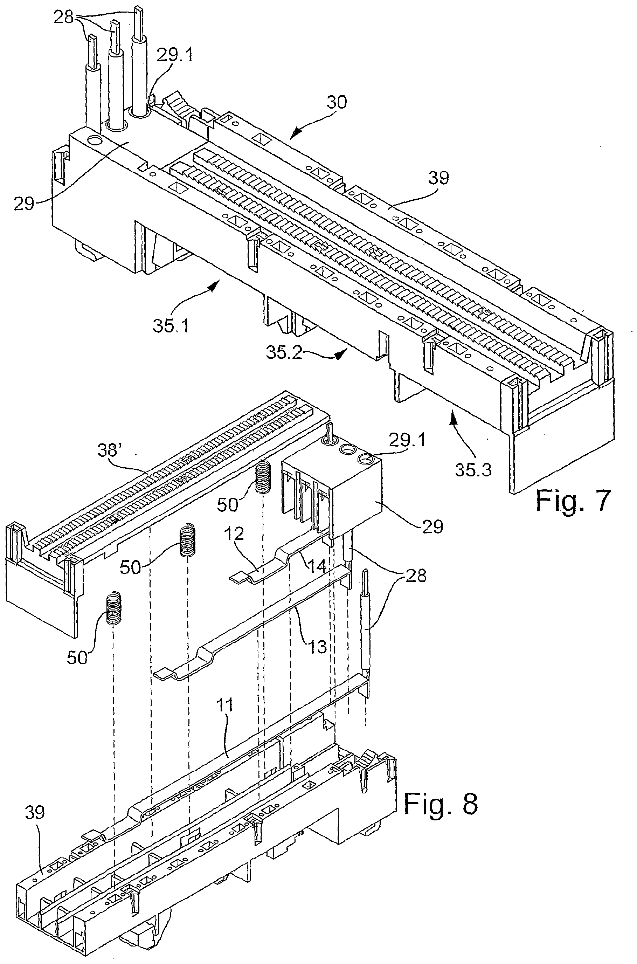

Fig. 7 zeigt einen Geräteadapter 30 mit einer alternativen Ausgestaltung einer Anschlusseinheit, von der lediglich die an Anschlussstücken 28 ausgebildeten Anschlussaufnahmen zu sehen sind. Die Anschlussstücke 28, die mit ihren gegenüberliegenden Endbabschnitten, wie aus Fig. 8 ersichtlich, an den Kontaktschienen 11, 13 und 14 an abgewinkelten Flächenbereichen kontaktiert sind, sind durch Durchführungen 29.1 in einem an der Schmalseite des Adapaters im Bereich der Verbindungsaufnahmen 34 eingesetzten Einsatzstück 29 senkrecht zur Oberseite des Geräteadapters 30 herausgeführt. Die Verbindung zwischen den Anschlussstücken 28 und den Kontaktschienen ist vorteilhaft durch Schweißen, insbesondere Ultraschallschweißen, oder durch Löten hergestellt. An den Anschlussaufnahmen der Anschlussstücke 28 lassen sich Anschlussleitungen z.B. mittels Klemmen anschließen.

Wie Fig. 8 weiter zeigt, ist das Einsatzstück 29 auf der Unterseite hohl ausgebildet und weist Kammern auf, in denen die Kontaktbereiche zwischen den Anschlussstücken 28 und den Kontaktschienen 11, 13, 14 aufgenommen sind. Die Einsatzstücke 29 sind in dem Adaptergehäuse z.B. mittels Verrastung fixiert oder einfach eingesteckt und können auch mittels der Abdeckplatte 38' gehalten werden, die ihrerseits mit den oberen Rändern des Adaptergehäuses verrastet ist und Vorsprünge des Einsatzstückes 29 übergreift. Ferner zeigt Fig. 8, dass die Kontaktschienen vorteilhaft auf der Oberseite ihrer Kontaktstellen 12, 12' mittels Schraubenfedern 50 gegen die Unterseite der Abdeckplatte 38' abgestützt sind, um einen zuverlässigen Kontaktdruck auf den zugeordneten Stromsammelschienen zu erzeugen.

## Patentansprüche

1. Anschluss- oder Geräteadapter, der senkrecht zur Längsrichtung von Stromsammelschienen auf einer Montageeinheit aufsetzbar und mechanisch verbindbar ist, wobei im dreiphasig ausgebildeten Anschluss- oder Geräteadapter pro Stromsammelschiene ein Kontaktelement mit der zugekehrten Stromsammelschiene elektrisch leitend in Verbindung steht und die Kontaktelemente im Anschluss- oder Geräteadapter zu Anschlussaufnahmen (22, 23; 22', 23'; 22", 23", 29.1) für den Anschluss einer Leitung, eines Steckers oder dergleichen im Bereich einer Schmalseite des Anschluss- oder Geräteadapters geführt sind, wobei die als Kontaktschienen (11, 13, 14; 11', 13', 14') ausgebildeten Kontaktelemente mit den zugeordneten Anschlussaufnahmen (22, 23; 22', 23'; 22", 23"; 29.1) elektrisch leitend verbunden sind und der Anschluss- oder Geräteadapter (30) die Kontaktelemente (11, 13, 14; 11', 13', 14'; 10.1") mit Kontaktstellen (12, 12') positioniert zu den Stromsammelschienen aufnimmt, wobei die Kontaktschienen (11, 13, 14; 11', 13', 14') mit den zugeordneten Anschlussaufnahmen (22, 23; 22', 23'; 22", 23"; 29.1) Anschlusseinheiten (10.1, 10.2, 10.3; 10.1', 10.2', 10.3'; 10.1") bilden, wozu die Anschlussaufnahmen (22, 23; 22', 23'; 22", 23"; 29.1) in isolierenden Anschlussblöcken (20, 20', 20", 29) festgelegt sind, wobei der Anschluss- oder Geräteadapter (30) im Bereich einer Schmalseite als Verbindungsaufnahmen ausgebildete Aufnahmen (34) aufweist, in denen die Anschlusseinheiten (10.1, 10.2, 10.3; 10.1', 10.2', 10.3'; 10.1") fixiert sind, und wobei drei Anschlusseinheiten (10.1, 10.2, 10.3; 10.1', 10.2', 10.3', 10") mit unterschiedlich langen, auf die beabstandeten Stromsammelschienen abgestimmten Kontaktelementen (11, 13, 14; 11', 13', 14') verwendet sind, **dadurch gekennzeichnet, dass** die Verbindungsaufnahmen (34) an der Schmalseite des Anschluss- oder Geräteadapters (30) als Einzelaufnahmen für einen jeweiligen Anschlussblock (20, 20') ausgebildet sind, wobei die Einzelaufnahmen als Rastaufnahmen für die Anschlussblöcke (20, 20') ausgebildet sind.

2. Adapter nach Anspruch 1, **dadurch gekennzeichnet, dass** die Rastaufnahmen unterschiedlich breite Anschlussblöcke (20, 20') mit unterschiedlich breiten Kontaktelementen (11, 13, 14; 11', 13', 14') aufnehmen, wobei die Breite parallel zur Längsrichtung der Stromsammelschienen ausgerichtet ist.

3. Adapter nach einem der Anspruche 1 bis 2, **dadurch gekennzeichnet, dass** der Anschluss- oder Geräteadapter (30) auf der der Montageeinheit zuzukehrenden Unterseite mittels Trennwände (36, 37) in Sammelschienenaufnahmen (35.1, 35.2, 35.3) unterteilt ist, dass die Kontaktelemente (11, 13, 14; 11', 13', 14') auf der Oberseite oder einer Zwischenwand des Anschluss- oder Geräteadapters (30) von Längsnuten (31) aufgenommen und mit den an deren Enden ausgeformten, bügelartigen Kontaktstellen (12, 12') durch Aussparungen (32) in die Sammelschienenaufnahmen (35.1, 35.2, 35. 3) ragen, und dass die Kontaktelemente (11, 13, 14; 11', 13', 14') auf der Oberseite oder der Zwischenwand mittels einer Abdeckplatte (38, 38') abgedeckt sind.

4. Adapter nach Anspruch 3, **dadurch gekennzeichnet, dass** die Kontaktelemente (11, 13, 14; 11', 13', 14') auf ihrer Oberseite mittels Schraubenfedern (50) gegen die Unterseite der Abdeckplatte (38) abgestützt sind.

5. Adapter nach Anspruch 3 oder 4, **dadurch gekennzeichnet, dass** der Anschluss- oder Geräteadapter (30) auf seiner Oberseite überstehende Längsrandteile (39) aufweist, die eine Aufnahmewanne (40) für die Kontaktelemente (11, 13, 14; 11', 13', 14') bilden und dass die Abdeckplatte (38) in diese Aufnahmewanne (40) eingerastet ist.

6. Adapter nach einem der Anspruche 3 und 5, **dadurch gekennzeichnet, dass** die Kontaktelemente (11, 13, 14; 11', 13', 14') im Anschluss an die Kontaktstellen (12, 12') mit einem Endteil die Aussparungen (32) überbrücken und auf der Oberseite oder der Zwischenwand des Anschluss- oder Geräteadapters (30) aufliegen.

7. Adapter nach Anspruch 1, **dadurch gekennzeichnet, dass** der Anschluss- oder Geräteadapter (30) an der Schmalseite nur eine Verbindungsaufnahme (34) für eine Anschlusseinheit (10.1; 10.1') mit einem Anschlussblock (20, 20') und einem Kontaktelement (11') aufweist.

8. Adapter nach Anspruch 1, **dadurch gekennzeichnet, dass** der Anschluss- oder Geräteadapter (30) an der Schmalseite eine Verbindungsaufnahme (34) für einen Anschlussblock mit drei Kontaktelementen (11, 13, 14; 11', 13', 14') aufweist.

9. Adapter nach einem der Anspruche 1 bis 8, **dadurch gekennzeichnet, dass** die Anschlussaufnahmen (22, 23; 22', 23'; 22", 23", 29.1) der Anschlusseinheiten (10.1, 10.2, 10.3; 10.1', 10.2', 10.3', 10.1") als schraubenlose Klemmanschlüsse für Einzelleiter ausgebildet sind.

10. Adapter nach einem der Anspruche 1 bis 9, **dadurch gekennzeichnet, dass** die Anschlussaufnahmen (22, 23; 22', 23'; 22", 23, 29.1") als elektrische Steckaufnahmen für elektrische Stecker (25) ausgebildet sind, die ihrerseits mit Leiteranschlüssen (22", 23") für anzuschließende Leiter versehen sind.

11. Adapter nach Anspruch 1, **dadurch gekennzeichnet dass** die Anschlussaufnahme (28.1) an einem Anschlussstück (28) ausgebildet ist, das mit seiner anderen Seite an der Kontaktschiene (11, 13, 14; 11', 13', 14') fest kontaktiert ist.

## Claims

1. A connector or device adapter, which can be placed on a mounting unit perpendicularly with respect to a longitudinal direction of bus bars in the mounting unit and can be mechanically connected thereto, wherein one contact element per bus bar in the three-phase connector or device adapter is in an electrically conducting connection with the facing bus bar, and in the connector or device adapter the contact elements are electrically conducted to connection receptacles (22, 23; 22', 23'; 22", 23"; 29.1) near a narrow side of the connector or device adapter for the connection of a line, a plug or the like, the contact elements formed as contact rails (11, 12, 14; 11', 13', 14') are connected in an electrically conducting manner with the associated connection receptacles (22, 23; 22', 23'; 22", 23"; 29.1), and the connector or device adapter (30) receives the contact element (11, 13, 14; 11', 13', 14'; 10.1") with contact points (12, 12") positioned with respect to the bus bars, the contact rails (11, 13, 14; 11', 13', 14') forming connecting units (10.1, 10.2, 10.3; 10.1', 10.2', 10.3'; 10.1") with the associated connection receptacles (22, 23; 22', 23'; 22", 23"; 29.1), wherein the connection receptacles (22, 23; 22', 23'; 22", 23"; 29.1) are fixed in place in insulating connection blocks (20, 20', 20", 29), wherein the connector or device adapter (30) having receptacles (34) formed as connection receptacles near a narrow side of the connector or device adapter, the connecting units (10.1, 10.2, 10.3; 10.1', 10.2', 10.3'; 10.1") are fixed in place in the receptacles (34) formed as connection receptacles, wherein three of the connecting units (10.1, 10.2, 10.3; 10.1', 10.2', 10.3', 10") with contact elements (11, 13, 14; 11', 13', 14') of different lengths, matched to the spaced-apart bus bars, are employed, **characterized in that** the connection receptacles (34) are arranged at the narrow side of the connector or device adapter (30) and are embodied as individual receptacles for a respective connection block (20, 20'), wherein the individual receptacles are embodied as snap-in receptacles for the connection blocks (20, 20').

2. The adapter in accordance with claim 1, wherein the snap-in receptacles accept connection blocks (20, 20') of different widths with contact elements (11, 13, 14; 11', 13', 14') of different widths, wherein the width is oriented parallel with respect to the longitudinal direction of the bus bars.

3. The adapter in accordance with one of the claims 1 to 2, wherein on an underside facing the mounting unit, the adapter (30) is divided into bus bar receptacles (35.1, 35.2, 35.3) by separating walls (36, 37), the contact elements (11, 13, 14; 11', 13', 14') are received in longitudinal grooves (31) on the top or an intermediate wall of the connector or device adapter (30) and protrude with bow-like contact points (12, 12') formed on their ends through openings (32) into the bus bar receptacles (35.1, 35.2, 35.3), and the contact elements (11, 13, 14; 11', 13', 14') are covered on the top or the intermediate wall by a cover plate (38, 38').

4. The adapter in accordance with claim 3, wherein the contact elements (11, 13, 14; 11', 13', 14') are supported on the top by helical springs (50) against the underside of the cover plate (38, 38').

5. The adapter in accordance with claim 3 or 4, wherein the connector or device adapter (30) has on its top projecting longitudinal edge elements (39), which form a reception trough (40) for the contact elements (11, 13, 14; 11', 13', 14') and the cover plate (38) is snapped into the reception trough (40).

6. The adapter in accordance with one of the claims 3 and 5, wherein following the contact points (12, 12') the contact elements (11,13, 14; 11', 13', 14') bridge the openings (32) by an end section and rest on the top or the intermediate wall of the connector or device adapter (30).

7. The adapter in accordance with claim 1, wherein the connector or device adapter (30) has one connection receptacle (34) on the narrow side for a connection unit (10.1; 10.1') with a connection block (20, 20') and a contact element (11').

8. The adapter in accordance with claim 1, wherein the connector or device adapter (30) has a connection receptacle (34) on the narrow side for a connection block with three contact elements (11, 13, 14; 11', 13', 14').

9. The adapter in accordance with one the claims 1 to 8, wherein the connection receptacles (22, 23; 22', 23'; 22", 23", 29.1) of the connection units (10.1, 10.2, 10.3; 10.1', 10.2', 10.3', 10.1") are screwless clamping connectors for individual conductors.

10. The adapter in accordance with one of the claim 1 to 9, wherein the connection receptacles (22, 23; 22', 23'; 22", 23", 29.1") are designed as electrical plug-in receptacles for electrical plugs (25) which have line connections (22", 23") for lines to be connected.

11. The adapter in accordance with claim 1, wherein the connector receptacle (28.1) is formed on a connector element (28) whose other side is in firm electrical contact with the contact rail (11, 13, 14; 11', 13', 14').

## Revendications

1. Adaptateur de branchement ou d'appareil qui peut être posé et relié mécaniquement perpendiculairement à la direction longitudinale de barres collectrices sur une unité de montage, moyennant quoi, dans l'adaptateur de branchement ou d'appareil, conçu de manière triphasée, pour chaque barre collectrice, un élément de contact est relié de manière électro-conductrice avec la barre collectrice et les éléments de contact dans l'adaptateur de branchement ou d'appareil sont guidés vers des logements de branchement (22, 23 ; 22', 23' ; 22", 23", 29.1) pour le branchement d'une ligne, d'un connecteur ou autre au niveau d'un côté étroit de l'adaptateur de branchement ou d'appareil, les éléments de contact conçus comme des rails de contact (11, 13, 14 ; 11', 13', 14') étant reliés de manière électro-conductrice avec les logements de branchement (22, 23 ; 22', 23' ; 22", 23", 29.1) correspondants et l'adaptateur de branchement ou d'appareil (30) loge les éléments de contact (11, 13, 14 ; 11', 13', 14' ; 10.1) avec des points de contact (12, 12') positionnés par rapport aux barres collectrices, les rails de contact (11, 13, 14 ; 11', 13', 14') constituant, avec les logements de branchement (22, 23 ; 22', 23' ; 22", 23", 29.1) correspondants, des unités de branchement (10.1, 10.2, 10.3 ; 10.1', 10.2', 10.3' ; 10.1"), les logements de branchement (22, 23 ; 22', 23' ; 22", 23", 29.1) étant pour cela fixés dans des blocs de branchement isolants (20, 20', 20", 29), l'adaptateur de branchement ou d'appareil (30) comprenant, au niveau d'un côté étroit, des logements (34) conçus comme des logements de liaison, dans lesquels les unités de branchement (10.1, 10.2, 10.3 ; 10.1', 10.2', 10.3' ; 10.1") sont fixées et trois unités de branchement (10.1, 10.2, 103 ; 10.1', 10.2', 10.3'; 10.1") avec des éléments de contact (11, 13, 14 ; 11', 13', 14') de différentes longueurs, adaptés aux barres collectrices distantes, étant utilisées, **caractérisé en ce que** les logements de liaison (34) sont réalisés sur le côté étroit de l'adaptateur de branchement ou d'appareil (30) comme des logements individuels pour un bloc de branchement (20, 20') correspondant, les logements individuels étant conçus comme des logements à encliquetage pour les blocs de branchement (20, 20').

2. Adaptateur selon la revendication 1, **caractérisé en ce que** les logements à encliquetage logent des blocs de branchement (20, 20') de différentes largeurs avec des éléments de contact (11, 13, 14 ; 11', 13', 14') de différentes largeurs, la largeur étant orientée parallèlement à la direction longitudinale des barres collectrices.

3. Adaptateur selon l'une des revendications 1 à 2, **caractérisé en ce que** l'adaptateur de branchement ou d'appareil (30) est divisée, sur le côté inférieur orienté vers l'unité de montage, au moyen de cloisons (36, 37), en logements de barres collectrices (35.1, 35.2, 35.3), **en ce que** les éléments de contact (11, 13, 14 ; 11', 13', 14') sont logés sur le côté supérieur ou sur une paroi intermédiaire de l'adaptateur de branchement ou d'appareil (30) par des rainures longitudinales (31) et dépassent, avec les points de contact (12, 12') en forme d'étrier formés à leurs extrémités, à travers des orifices (32) dans les logements de barres collectrices (35.1, 35.2, 35.3) et **en ce que** les éléments de contact (11, 13, 14 ; 11', 13', 14') sont recouverts sur le côté supérieur ou sur la paroi intermédiaire au moyen d'une plaque de recouvrement (38, 38').

4. Adaptateur selon la revendication 3, **caractérisé en ce que** les éléments de contact (11, 13, 14 ; 11', 13', 14') sont appuyés, sur leur côté supérieur, au moyen de ressorts hélicoïdaux (50), contre le côté inférieur de la plaque de recouvrement (38).

5. Adaptateur selon la revendication 3 ou 4, **caractérisé en ce que** l'adaptateur de branchement ou d'appareil (30) comprend, sur son côté supérieur, des parties de bord longitudinal (39) en saillie, qui forment un bac de logement (40) pour les éléments de contact (11, 13, 14 ; 11', 13', 14') et **en ce que** la plaque de recouvrement (38) est encliquetée dans ce bac de logement (40).

6. Adaptateur selon l'une revendication 3 et 5, **caractérisé en ce que** les éléments de contact (11, 13, 14 ; 11', 13', 14') enjambent, à la suite des points de contact (12, 12'), avec une partie d'extrémité, les orifices (32) et reposent sur le côté supérieur ou la paroi intermédiaire de l'adaptateur de branchement ou d'appareil (30).

7. Adaptateur selon la revendication 1, **caractérisé en ce que** l'adaptateur de branchement ou d'appareil (30) comprend, sur le côté étroit, seulement un logement de liaison (34) pour une unité de branchement (10.1 ; 10.1') avec un bloc de branchement (20, 20') et un élément de contact (11').

8. Adaptateur selon la revendication 1, **caractérisé en ce que** l'adaptateur de branchement ou d'appareil (30) comprend, sur le côté étroit, un logement de liaison (34) pour un bloc de branchement avec trois éléments de contact (11, 13, 14 ; 11', 13', 14').

9. Adaptateur selon l'une revendication 1 à 8, **caractérisé en ce que** les logements de branchement (22, 23 ; 22', 23' ; 22", 23" ; 29.1) des unités de branchement (10.1, 10.2, 10.3 ; 10.1', 10.2', 10.3', 10.1") sont conçus comme des branchements de bornes sans vis pour des conducteurs individuels.

10. Adaptateur selon l'une revendication 1 à 9, **caractérisé en ce que** les logements de branchement (22, 23 ; 22', 23' ; 22", 23" ; 29.1) sont conçus comme des logements d'enfichage électriques pour des connecteurs électriques (25) qui sont munis de branchements de conducteurs (22", 23") pour des conducteurs à brancher.

11. Adaptateur selon la revendication 1, **caractérisé en ce que** le logement de branchement (28.1) est réalisé sur une pièce de branchement (28), qui est mis en contact fermement, avec son autre côté, au niveau du rail de contact (11, 13, 14 ; 11', 12', 14').
